# EUROPÄISCHE PATENTSCHRIFT

(11) **EP 1 277 969 B1**
(45) Veröffentlichungstag und Bekanntmachung des Hinweises auf die Patenterteilung: **19.01.2005**
(21) Anmeldenummer: 01810721.9
(22) Anmeldetag: 20.07.2001
(51) Int. Cl.: F16B 7/14

(54) **Verstelleinrichtung**
Adjustment device
Dispositif d'ajustage

(43) Veröffentlichungstag der Anmeldung: 22.01.2003
(73) Patentinhaber: Elodorm AG, 2562 Port (CH)
(72) Erfinder: Herzig, Rolf, 1997 Haute-Nendaz (CH); Erb, Andreas, 3612 Steffisburg (CH); Brunner, Emanuel, 2502 Biel (CH)
(74) Vertreter: Roshardt, Werner Alfred, Dipl.-Phys.

(56) Entgegenhaltungen:
- WO-A-01/09523
- PATENT ABSTRACTS OF JAPAN vol. 1998, no. 10, 31. August 1998 (1998-08-31) & JP 10 122324 A (NAKAO:KK), 15. Mai 1998 (1998-05-15)

## Beschreibung

### Technisches Gebiet

Die Erfindung betrifft eine Verstelleinrichtung gemäss dem Oberbegriff des Patentanspruchs 1.

### Stand der Technik

In der JP 10-122324 ist eine Arbeitsbühne mit zwei linearen Verstelleinrichtungen beschrieben. Jede Verstelleinrichtung hatte eine in eine Hohlspindel eingreifende Spindel. Die Anordnung der beiden Spindeln war mit drei rechteckigen, ineinander vertikal verschiebbaren Führungselementen umgeben. Die Aussenwand des mittleren Führungselements glitt zur Führung der Verstelleinrichtung auf der Innenwand des unteren Führungselements und die Aussenwand des oberen Führungselements auf der Innenwand des mittleren Führungselements. Die Führungselemente dienten zur Stabilisierung der beiden Spindeln; es sollte ein seitliches Ausknicken verhindert werden. Die Spindeln griffen über Spindelmuttern an den Böden des mittleren und oberen Führungselements an.

In der WO 01/09523 ist eine Gewindestangenanordnung für Verstellzwecke mit mehreren ineinander schraubbaren Gewinderohren beschrieben. Die Gewinderohren waren aus Holzspänen gepresst. Alle Gewindestangen mit Ausnahme der ersten und der letzten hatten ein über die gesamte Länge sich erstreckendes Innen- und Aussengewinde. Die erste Gewindestange hatte nur ein sich über die gesamte Länge ersteckendes Innengewinde und die letzte Gewindestange ein sich über die gesamte Länge ersteckendes Aussengewinde. Alle Gewinde hatten ein- und dieselbe Gängigkeit, waren also rechts- oder linksgängig ausgebildet. Man hatte darauf geachtet, dass ein vergleichsweise grosser Reibungskoeffizient sowohl hinsichtlich der Haftreibung als auch hinsichtlich der Gleitreibung vorhanden war; es wurde eine möglichst grosse Selbsthemmung gewünscht. Um eine Längenverstellung der bekannten Gewindestangenanordnung vorzunehmen, musste jeweils eine Gewindestange verdreht und die beiden benachbarten gegen Verdrehen fixiert werden. Das Verdrehen und Fixieren der betreffenden Gewindestangen war nur durch einen Zangenangriff jeweils um das Aussengewinde möglich. Durch diesen Zangenangriff, der bevorzugt aufgrund der unterschiedlichen Aussendurchmesser mit einer Rohrzange vorgenommen werden musste, ergab sich zwangsläufig eine Verletzung der jeweiligen Aussengewinde. Eine Verstellung der Gewindestangenanordnung war somit nur einige wenige Male möglich, danach war das Außengewinde stark beschädigt, was in der Regel zu einer starken Reduzierung der Tragkraft führte. Die Gewindestangenanordnung für Verstellzwecke der WO 01/09523 war somit nur äußerst begrenzt für wenige Verstellvorgänge verwendbar.

### Darstellung der Erfindung

### Aufgabe der Erfindung

Aufgabe der Erfindung ist es eine Verstelleinrichtung zu schaffen, welche im Gegensatz zu derjenigen in der WO 01/09523 beschriebenen eine Vielzahl von Verstellvorgänge ohne jegliche Beschädigung und nahezu ohne jegliche Abnützung zuläßt. Zudem soll sich die erfindungsgemäße Verstelleinrichtung auf einfache Art und Weise mit einem Antrieb ausrüsten und verstellen lassen.

### Lösung der Aufgabe

Die Aufgabe wird dadurch gelöst, dass wenigstens drei ineinander schraubbare zylinderrohrartige Einheiten vorhanden sind, welche alle eine gemeinsame geometricsche Achse haben: Wenigstens eine der Einheiten ist verdrehfest und wenigstens eine weitere ist um diese geometrische Achse verdrehbar ausgebildet. Vorzugsweise wird man sämtliche restlichen Einheiten um die geometrische Achse verdrehbar ausbilden.

Werden alle bis auf eine Einheit verdrehbar ausgebildet, so kann, wie unten ausgeführt ist, bei einer Konstruktion ohne verriegelbare Rastelemente zwischen den Einheiten nicht immer exakt angegeben werden, welche der drehbaren Einheiten gerade dreht. Dies ist aber nicht unbedingt von Nachteil, wenn es nur darum geht, mit der Verstelleinrichtung deren Endorte distanzmäßig zu verändern.

Die Verstelleinrichtung weist mehrere ineinander schraubbare zylinderrohrartige Einheiten auf. Diese Einheiten sollen durch eine Schraubbewegung derart ineinander schraubbar sein, dass die Distanz zwischen den Endorten der Verstelleinrichtung sich ändert. Eine nach dem Prinzip der schiefen Ebene arbeitende Verbindung zwischen jeweils zwei Einheiten können nun miteinander kämmende Gewinde sein. Anstelle einer Gewindeverbindung kann auch auf einer Einheit eine schraubenartig angeordnete Nut vorhanden sei, in der ein an einer anderen Einheit angeordneter Bolzen entlang gleitet. Die Kraftübertragung kann jedoch auch über eine oder mehrere Kugeln erfolgen.

Die kraftübertragende Verbindung zwischen jeweils benachbarten Einheiten (Zylindern) wird man vorzugsweise, sofern mehr als drei Einheiten verwendet werden, selbsthemmend ausbilden. Bei lediglich drei Einheiten kann der Antrieb die Hemmung vornehmen.

Es kann nun ein Antrieb oder es können mehrere Antriebe vorgesehen sein bzw. werden. Vorzugsweise wird man jedoch lediglich einen Antrieb aus Kostengründen vorsehen. Ein Antrieb gegenüber mehreren benötigt nur einen geringfügig größeren konstruktiven Aufwand an den Einheiten. Der bzw. die Antriebe können innerhalb des innersten, dünnsten Zylinders oder auch außerhalb der Zylinder angeordnet sein. Vorzugsweise wird man den Antrieb nach Innen setzen, da sich hierdurch ein kompakter Aufbau ergibt.

Der bzw. die Antriebe können nun formschlüssig mit jeweils einer Einheit, um diese in eine rotierende Bewegung zu versetzen, in Kontakt treten. Es werden dann beispielsweise Getriebeteile oder ein in einer axialen Nut angreifender Ansatz am Rotor verwendet. Anstelle der Nut kann natürlich auch deren Gegenstück, eine Erhebung, und am Rotorarm eine Ausbuchtung vorgesehen werden.

Es kann aber auch eine reibschlüssige Kraftübertragung erfolgen, wobei dann keine Nut bzw. keine Erhebung benötigt wird. Eine reibschlüssige Verbindung zeigt jedoch einen größeren Verschleiß.

Es kann jedoch auch gänzlich auf eine mechanische Verbindung des Antriebs mit der Einheit verzichtet werden, wenn eine magnetische Kopplung analog zu einem Asynchronmotor verwendet wird. Hierbei werden mittels einem umlaufenden Magnetfeld Wirbelfelder in einer zu verdrehenden Einheit erzeugt.

Die innerste oder die äußerste Einheit wird man verdrehfest ausbilden. Innerste und äußerste Einheit sind die Einheiten, welche bei ausgefahrener Verstelleinrichtung die Enden definieren. Wird eine derartige Konstruktion gewählt, so sollte auf der verdrehbaren Einheit eine Halteplatte angeordnet werden, in der sich dann die freie Stimseite der betreffenden Einheit drehen kann. Die Halteplatte liegt dann nicht verdrehbar an dem zu verschiebenden Gegenstand an.

Auf die Halteplatte kann jedoch verzichtet werden, wenn die beiden Endeinheiten - die innere und die äußere - verdrehfest ausgebildet werden. Bei einer einfachen Ausführungsform verwendet man dann drei Einheiten, nämlich eine innere, eine mittlere und eine äußere. Lediglich die mittlere Einheit ist dann noch verdrehbar ausgebildet.

Die drei Einheiten weisen nun Innen- und Aussengewinde auf, welche miteinander kämmen. Vorzugsweise wird man nun die mit der mittleren Einheit und mit der äußeren Einheit kämmenden Gewinde und diejenigen mit der inneren und der mittleren Einheit kämmenden derart ausbilden, dass eine Gegengängigkeit gegeben ist. D.h., dass einmal ein Rechts- und einmal ein Linksgewinde vorhanden ist. Wird nun die mittlere Einheit verdreht, so werden je nach Drehsinn die äußere und innere Einheit in die mittlere Einheit hineingezogen bzw. herausgeschoben. Vorzugsweise wird man auch hier die Gewinde selbsthemmend ausbilden.

Um die mittlere Einheit durch eine Antriebseinheit in Rotation versetzen zu können, ist deren Stator an der äußeren oder der inneren Einheit verdrehgesichert gehalten. Der Rotor der Antriebseinheit greift an der mittleren Einheit an.

Vorzugsweise, um eine gedrungene Bauweise zu erhalten, sind die äußere, mittlere und innere Einheiten annähernd gleich lang ausgebildet. Hierdurch ist eine lineare Verstellung zwischen der Länge einer einzigen Einheit bis zur dreifachen Länge (minus die Überlappungswege) möglich. Der Überlappungsweg ist ein erster Weg, auf dem die mittlere in der äußeren Einheit aus Stabilitätsgründen eingefahren bleiben muss, sowie zusätzlich ein zweiter Weg, auf dem die innere in der mittleren Einheit eingefahren bleiben muss.

Es ist nun dafür zu sorgen, dass sich beim Verdrehen der mittleren Einheit die äußere nicht ebenfalls gegen die innere Einheit verdreht Beide Einheiten kann man nicht fest miteinander verbinden, da sie sich relativ zueinander axial bewegen können müssen. Zwischen beiden Einheiten können nun eine oder mehrere teleskopartig ausziehbare Stützen angeordnet werden, welche auch innerhalb der Einheiten angeordnet werden können. Auch können innere und äußere Einheiten mit einer Verdrehsicherung in einer Führungsschiene gehalten werden. Der Nachteil der Führungsschiene ist jedoch, dass diese immer die maximale Verstellänge haben muss und somit unter Umständen mit ihrer Länge störend sein kann. Auf die Verdrehsicherung kann verzichtet werden, wenn mehrere gleichartige Verstelleinrichtungen an ein- und demselben Gegenstand angreifen.

. Wie bereits ausgeführt, sollte die mittlere Einheit relativ zur äußeren und inneren Einheit mit einem Antrieb in Rotation versetzbar sein. Hierzu gibt es mehrere Möglichkeiten. Man kann nun den Stator des Antriebs außen am Mantel der äußeren zylinderrohrartigen Einheit anordnen. Der Rotor wirkt dann außen auf den Mantel der mittleren Einheit. Die mittlere. Einheit hat jedoch ein Außengewinde, welches mit einem Innengewindekranz mit der äußeren Einheit kämmt. An dem Rotor kann nun ein Rad angeordnet werden, welches über einen Reibschluss auf den Gewinde tragenden Mantel der mittleren Einheit antreibend wirkt Es kann aber auch ein Formschluß gewählt werden, wenn dem Außengewinde (Schraubgewinde) eine Schneckenverzahnung (es muss die axiale Verschiebung möglich sein) für ein auf dem Rotor anzuordnendes Zahnrad überlagert wird.

Wie bereits oben ausgeführt, kann auf eine mechanische Verbindung des Rotors mit der mittleren Einheit verzichtet werden, wenn diese metallisch ausgebildet ist und ein Antrieb analog einem Asynchronmotor gewählt wird. Der Stator ist dann ebenfalls außen an der äußeren Einheit angeordnet. Der Stator ist derart ausladend ausgebildet, dass der überladende Teil nur einen kleinen Luftspalt zur Manteloberfläche der mittleren Einheit aufweist. Der überladende Teil trägt nun eine Wicklung in der ein umlaufendes magnetisches Wechselfeld erzeugt wird. Dieses Wechselfeld induziert in der mittleren Einheit Wirbelstörme, welche diese in Richtung des umlaufenden Wechselfeldes mitnehmen.

In vorteilhafter Weise wird man jedoch den Antrieb innerhalb der drei Einheiten anbringen. Man kann die beiden Funktionen von Außengewinde (lineare Verschiebung durch Schraubbewegung) und Antriebskraftübertragung auf die mittlere Einheit voneinander trennen. Die Anordnung kann dann derart gewählt werden, dass der Stator axial verschiebbar, aber gegen Verdrehen gesichert innerhalb der inneren Einheit gehalten ist. Die Rotorachse ist dann fest mit der mittleren Einheit verbunden. Die axiale Verschiebbarkeit des Stators erfolgt mit in Längsnuten im Innenraum der inneren Einheit gleitenden Stegen. Diese Halterung kann jedoch umgekehrt ausgebildet sein, in dem im Innenraum wenigstens ein Steg und im Statorgehäuse dann die dazu passenden Nuten vorhanden sind.

Wie bereits schon oben angedeutet, ist die Verstelleinrichtung nicht auf nur drei zylinderrohrartige ineinandergreifende Einheiten beschränkt. Es können auch mehr sein. Die Anzahl muss jedoch bei jeweils festen, also nicht verdrehbaren Endeinheiten ungerade sein. Ausgehend von einem Ende der auch hier ineinandergreifenden Einheit muss dann jede gerade Einheit angetrieben und alle ungeraden gegen Verdrehen gesichert angeordnet werden.

Wird lediglich eine einzige Endeinheit festgehalten und alle anderen sind um ein und dieselbe Achse verdrehbar ausgebildet, wird die bereits oben erwähnte Halteplatte benötigt und die Anzahl Einheiten ist beliebig.

Es können auch beide Endeinheiten verdrehbar ausgebildet werden; es ist dann allerdings an jeder freien Strinseite der Endeinheiten eine Halteplatte vonnöten und eine der anderen Einheiten muss verdrehfest sein. Eine derartige Anordnung wird man wählen, wenn ausgehend von einer Grundeinheit ein Auseinandertreiben zweier Gegenstände vorgenommen werden muss.

### Kurze Beschreibung der Zeichnungen

Im Folgenden werden Beispiele der erfindungsgemäßen Verstelleinrichtung anhand der nachfolgenden Zeichnungen näher erläutert. Weitere Vorteile der Erfindung ergeben sich aus dem Beschreibungstext. Es zeigen:
- Fig. 1: einen Längsschnitt durch die erfindungsgemäße Verstelleinrichtung im ausgefahrenen Zustand,
- Fig. 2: einen Längsschnitt durch die in **Figur 1** gezeigt Vorrichtung jedoch im zusammengefahrenen Zustand,
- Fig. 3: einen Querschnitt der in **Figur 2** gezeigten Vorrichtung entlang der dortigen Linie III - III,
- Fig. 4: einen Querschnitt entlang der Linie IV - IV in **Figur 1**,
- Fig. 5: eine schematische Darstellung einer linearen Verstelleinrichtung mit mehr als drei, hier fünf Einheiten und
- Fig. 6: eine Variante zu den in den **Figuren 1 bis 5** dargestellten Verstelleinrichtungen, welche eine beliebige Anzahl von Einheiten aufweisen kann.

### Wege zur Ausführung der Erfindung

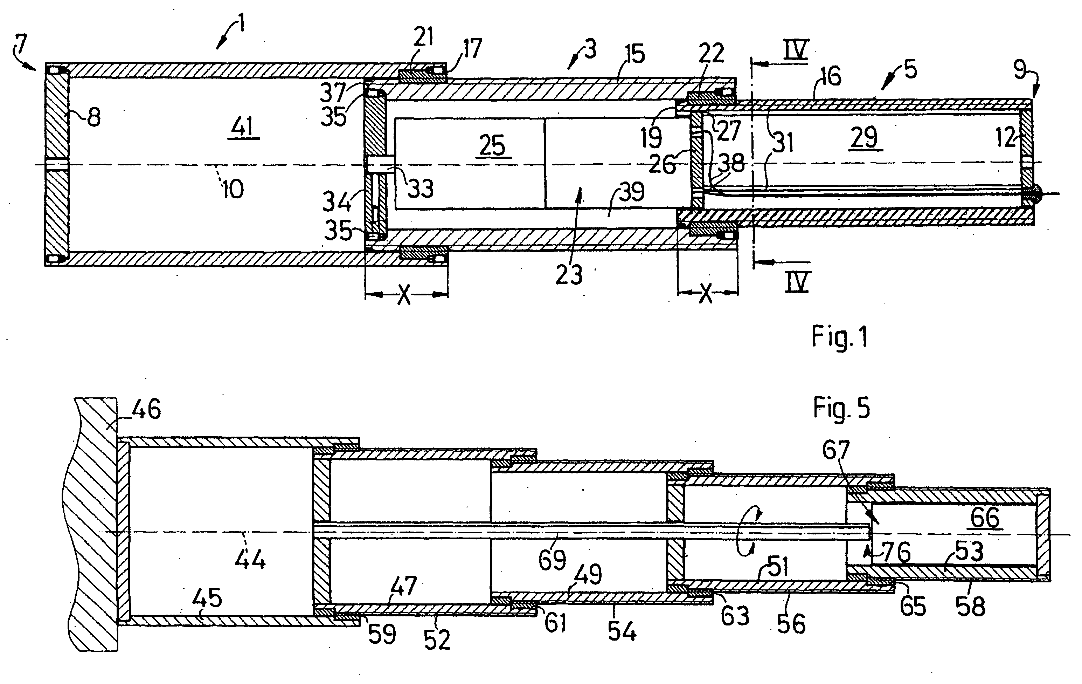

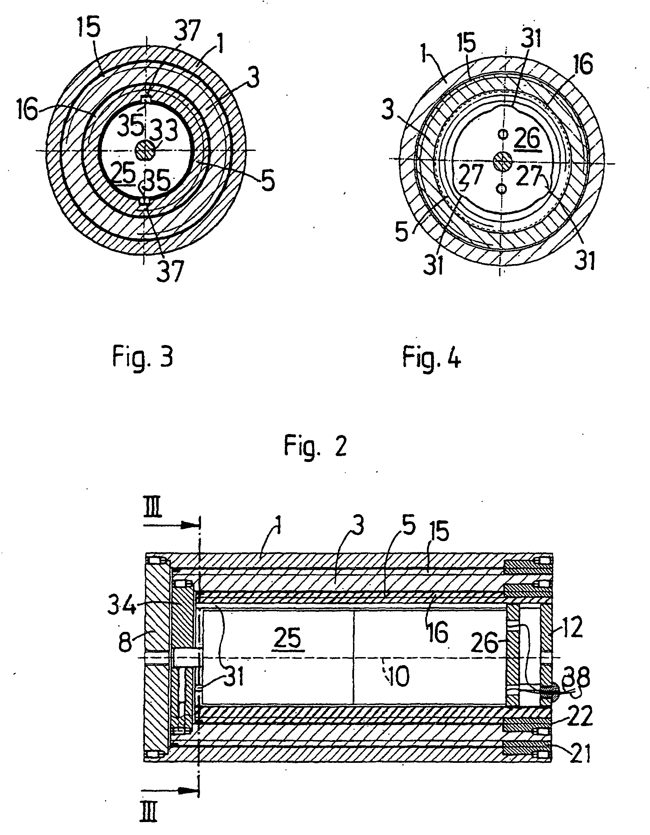

Die in den **Figuren 1 bis 3** gezeigte lineare Verstelleinrichtung hat lediglich drei ineinander greifende gewindetragende zylinderrohrartige Einheiten **1** bis **3**. Die drei Einheiten - innere Einheit **5**, mittlere Einheit **3** und äußere Einheit **1** - sind in **Figur 1** in ihrem vollständig ausgefahrenen Zustand, also in der größten linearen Länge und in **Figur 2** vollständig zusammengefahren, also mit ihrer kleinsten Länge dargestellt. Die Verstelleinrichtung kann als horizontal wirkende Anordnung, wie in den **Figuren 1** und **2** dargestellt, verwendet werden, sie kann aber auch als vertikale aufgestellt oder unter beliebigem Aufstellwinkel aufgestellte Anordnung eingesetzt werden. Sie kann auch dazu verwendet werden, die beiden Schenkel einer Schamierverbindung zu bewegen. In diesem Fall werden die Enden der Verstelleinrichtung schwenkbar an den Schenkeln befestigt. In das freie Ende **7** der äußeren Einheit **1** ist eine Befestigungsplatte **8** eingesetzt und in das freie Ende **9** der inneren Einheit **5** eine Halteplatte **12**, an der ein linear zu verschiebender Gegenstand befestigbar ist. Der Gegenstand kann nun bei stehender Vorrichtung oben oder bei hängender Vorrichtung zuunterst oder unter beliebigem Winkel angeordnet sein.

Alle drei Einheiten **1**, **3** und **5** haben eine gemeinsame geometrische Achse **10**. Die mittlere Einheit **3** ist um die geometrische Achse **10** verdrehbar angeordnet: Die innere Einheit **5** ist über einen Flansch, der in einer Nut **13** als Linearführung läuft zwar axial in Richtung der Achse **10** verschiebbar, jedoch nicht verdrehbar angeordnet.

Die mittlere und die innere Einheit **3** und **5** haben je ein Außengewinde **15** und **16**, welches sich jeweils über die gesamte Mantellänge erstreckt. Die äußere Einheit **5** und die innere Einheit **5** haben jeweils an ihrem ihrem freien Ende **7** bzw. **9** entgegengesetztem Ende **17** bzw. **19** einen Gewindekranz **21** bzw. **22**. Der Gewindekranz **21** ist an der äußeren Einheit **1** innen und der Gewindekranz **22** an der inneren Einheit **5** außen angeordnet

Das Außengewinde **15** zusammen mit dem Gewindekranz **21** bilden ein Rechtsgewinde und das Außengewinde **16** zusammen mit dem Gewindekranz **22** bilden ein Linksgewinde. Rotiert nun die mittlere Einheit **3** rechts herum, so schraubt sich die mittlere Einheit **3** in die äußere Einheit **1** und die innere Einheit **5** wird in die mittlere Einheit **3** hineingezogen. Wird der Drehsinn der mittleren Einheit **3** geändert, so fährt alles wieder auseinander.

Die Rotation der mittleren Einheit **5** zur Verstellung des Ausfahrweges erfolgt hier beispielsweise über einen Elektromotor **23** als Antrieb. Der Stator, d.h. das Gehäuse **25** des Elektromotors **23** ist verdrehgesichert, aber axial verschiebbar mit einer Stirnplatte **26** im Inneren der inneren Einheit **5** gehalten. Die Stirnplatte **26** hat drei nach außen gewölbte Ansätze **27** und in der Innenwand **29** der inneren Einheit **5** sind drei hierzu passende, über die gesamte Länge verlaufende koaxiale Vertiefungen **31** vorhanden.

Auf der Rotorachse **33** des Elektromotors **23** ist eine Scheibe **34** mit zwei Nokken **35** aufgesetzt. Die beiden Nocken **35** greifen in entsprechende Ausnehmungen **37** im Innenraum **39** der mittleren Einheit **5**. Es könnte auch eine feste Verbindung gewählt werden, welche sich jedoch schlechter montieren ließe.

Die Stromzuführung zum Elektromotor **23** erfolgt mit Kabeln **40**, welche im Innenraum **41** der inneren Einheit **1** verstaut sind.

Wie in **Figur 2** dargestellt, kann nun die mittlere in die äußere Einheit und gleichzeitig die innere in die mittlere Einheit so weit hineingezogen werden, dass gerade die nicht auf der Rotorachse **33** aufsitzende Scheibe **34** an der Befestigungsscheibe der äußeren Einheit **1** und die Halteplatte der inneren Einheit nicht an der Stirnplatte **26** ansteht. Um ein "Festfressen" der Gewinde **21, 15, 22** und **16** zu verhindern, wird die Drehbewegung kurz vor Erreichen der Endposition abgestellt. Die Endposition wird mit einem nicht dargestellten Sensor überwacht. Da lediglich ein Antrieb vorhanden ist, reicht für die Überwachung der beiden Endpositionen ein Sensor.

Der maximale Verschiebeweg zur vollständig ausgefahrenen Position ist durch einen für die Stabilität notwendigen Überlappungsweg x zwischen äußerer und mittlerer und mittlere und innerer Einheit **1** und **3** bzw. **3** und **5** gegeben. Der maximale Verschiebeweg ist, da die Einheiten **1**, **3** und **5** annähernd gleich lang gewählt worden sind, dreimal die Länge einer Einheit minus zweimal Überlappungsweg **x**. Die beiden Überlappungswege x können gleich groß oder auch unterschiedlich ausgewählt werden.

Anstelle eines Elektromotors als Antrieb können selbstverständlich auch andere Antriebe verwendet werden, welche z. B. mit Pressluft oder mit einem Hydrauliköl arbeiten.

Anstelle von auf dem gesamten Aussenmantel angeordneten Gewinden und mit diesen kämmenden Innengewindekränzen, kann auch in einer mechanischen Umkehr der gesamte Innenmantel ein Gewinde und der Aussenmantel lediglich einen Aussengewindekranz haben.

Die in den **Figuren 1 und 2** verwendeten elektrischen Kabel **38** für die Energiezuführung zum Elektromotor **23** können eliminiert werden, indem z. B. in der Vertiefung **31** voneinander isolierte Stromschienen angeordnet werden.

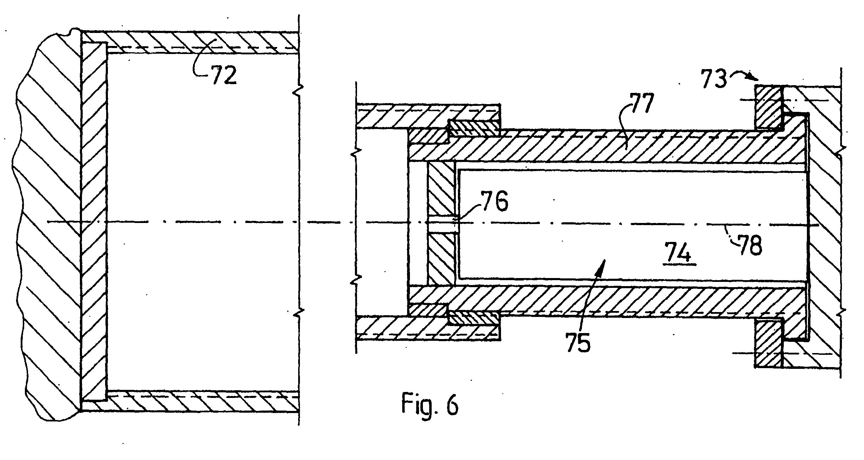

**Figur 5** zeigt eine Erweiterung der linearen Verstelleinrichtung von drei Einheiten auf fünf, wobei auch hier alle Einheiten ineinander einziehbar und wieder herausfahrbar sind und eine gemeinsame geometrische Achse 44 (analog der Achse 10) haben. Eine im Durchmesser größte Einheit **45** ist an ihrem freien Ende an einer Basis **46** befestigt, z. B. festgeschraubt. Die Einheit **45** hat im Gegensatz zu den restlichen vier Einheiten **47**, **49**, **51** und **53** kein Außengewinde. Jedes der Außengewinde **52**, **54**, **56** und **58** der Einheiten **47**, **49**, **51** und 53 kämmt mit einem Innengewindekranz **59**, **61**, **63** bzw. **65**. Der jeweilige Innengewindekranz **59**, **61**, **63** bzw. **65** ist immer an dem der Einheit **53** mit dem kleineren Durchmesser zugewandten Ende angeordnet. Die Einheit **53** mit dem kleinsten Durchmesser hat keinen Innengewindekranz. Die Gewindegängigkeit der miteinander kämmenden Gewinde - Außengewinde/ Gewindekranz - wechselt der Reihe nach. D.h. die Außengewinde **52** und **56** bilden mit den Innengewindekränzen **59** und **63** ein Rechtsgewinde und die Außengewinde **54** und **58** bilden mit den Innengewindekränzen **61** und **65** ein Linksgewinde. Die Einheiten **47** und **51** sind über ein- und denselben Antrieb angetrieben. Die Einheiten 45, 49 und 53 sind verdrehfest gehalten. Eine verdrehfeste Halterung kann beispielsweise mit einer Linearführung, in die Flansche eingreifen oder mit wenigstens einer bevorzugt mehreren Teleskopstangen, die ebenfalls mit seitlichen Flanschen die Einheit axial verschiebbar, aber verdrehfest halten, erreicht werden. Vorzugsweise wird man den Stator **66** des Antriebs **67** auch hier analog der obigen Ausführung mit nur drei Einheiten **1**, **3** und **5** verdrehfest, aber axial verschiebbar in der Einheit **53** mit dem kleinsten Durchmesser anordnen. Der Antrieb der Einheit **51** erfolgt dann analog zum Antrieb der Einheit **3**. Der Antrieb der Einheit **47** erfolgt über eine teleskopartig ausziebare, auf der Rotorachse angreifenden Teleskopachse **69**.

Diese Anordnung läßt sich durch weitere zugeschaltete Einheiten in ihrem Verschiebeweg vergrößern. Eine Begrenzung erfolgt lediglich durch das seitliche Spiel der teleskopartigen Verdrehsicherungen, welche bei einem zu großen Ausziehweg nicht mehr stabil genug sind.

Der Stator des Antriebs wurde bisher immer in einer axialen Verschiebeführung gehalten. Anstatt diese Verschiebeführung zu verwenden, kann der Stator auch fest im Innenraum der Einheit mit dem kleinsten Durchmesser eingebaut werden. Die in Rotation zu versetzenden Einheiten sind dann über eine teleskopartig ausziehbare Teleskopachse in Rotation zu versetzen.

Der Stator kann auch im Innenraum der Einheit mit dem größten Durchmesser montiert werden. Es ist jedoch hier darauf zu achten, dass vom Statoraußenmantel zur Innenwand der Einheit ein Freiraum vorhanden ist, in den die restlichen Einheiten mit ihren Wandstärken (inklusive Innengewindekranzdurchmesser) eingefahren werden können. Der Antrieb der in Rotation zu versetzenden Einheit erfolgt auch hier über Teleskopachsen.

Auf die Teleskopachse **69** kann verzichtet werden, wenn nicht mehr die innerste und die äußerste Einheit verdrehfest ausgebildet werden. Es wird dann nur eine dieser Einheiten verdrehbar ausgebildet und an der freien Stirnseite dieser Einheit eine relativ frei verdrehbare Halteplatte **73**, wie in **Figur 6** dargestellt, angeordnet. **Figur 6** zeigt nur die prinzipielle Funktionsweise, wobei hier die äußerste Einheit **72** verdrehfest und die innerste Einheit **77** verdrehbar angeordnet ist. Die innerste Einheit **77** ist in der Halteplatte **73** verdrehbar um die Achse **78** gehalten. Auf dieser Halteplatte **73** wird man dann vorzugsweise auch den Stator **74** eines Elektromotors **75** anbringen. Der Rotor **76** ist dann mit dieser benachbarten Einheit **77** verbunden.

Aus Platzersparnisgründen wird man die Halteplatte **73** an der inneren Einheit **77** anordnen und den Stator **74** innerhalb der Einheit **77**. Die innere Einheit **77** wird dann durch den Elektromotor angetrieben. Ausgehend von einer vollständig ausgefahrenen Verstelleinrichtung wird je nach den zufälligen Reibungsgegebenheiten in den miteinander kämmenden Gewinden benachbarter Einheiten dann irgend eine Einheit solange gegen die innere Einheit gezogen, bis diese entweder anschlägt oder die Reibung anderer miteinander kämmender Gewinde kleiner wird. Es ist nicht von Bedeutung, welche Gewinde gerade miteinander kämmen, da durch die aufgebrachte Drehbewegung immer zwei zueinander gehörende Gewinde zur Längenänderung miteinander kämmen. Wird eine gleiche Gewindesteigung verwendet, so können auch mehrere Verstelleinrichtungen parallel bei in der Umdrehung synchronisierten Antrieben verwendet werden. Ein Kippbewegung kann dann bei unterschiedlichen Drehzahlen erreicht werden.

Um einen kompakten Aufbau zu erreichen, ist oben der elektrische Antrieb in die innerste Einheit eingebaut worden. Man kann aber auch die innerste Einheit verdrehfest ausbilden und die äußerste Einheit verdrehen. Da alle anderen Einheiten in die Äusserste beim Zusammenschieben hineingezogen werden, wird man vorzugsweise einen Antrieb aussen an die äusserste Einheit anbringen. Dieser Antrieb kann nun mit einem Elektromotor und einer Getrlebeübertragung erfolgen; es kann aber auch ein manueller Antrieb über einen äusseren Zahnkranz am Mantel der äussersten Einheit und einem mit diesem kämmenden Zahnrad erfolgen. Vorzugsweise wird man die beiden Zahnräder als Kegelradpaar oder Hypoidradpaar ausbilden, um eine um 90° abgewinkelte Kraftübertragung zu erreichen. Soll z. B. die Verstelleinrichtung als Wagenheber verwendet werden, wird man das Zahnrad mit einer Ankopplung für eine "Handstange" ausbilden.

## Patentansprüche

1. Lineare Verstelleinrichtung, welche zu einer linearen, in sich stabilen Verstellung lediglich miteinander kämmende, ineinander schraubbare, zylinderrohrartige Einheiten (1, 3, 5; 45, 47, 49, 51, 53; 72, 77) aufweist, welche alle eine gemeinsame geometrische Achse (10; 44; 78) haben, wobei wenigstens drei Einheiten vorhanden sind und eine der Einheiten (1, 5; 45, 49, 53; 72) verdrehfest sowie wenigstens eine weitere Einheit (3; 47, 51; 77) um die geometrische Achse (10; 44; 78) verdrehbar ausgebildet sind, wenigstens ein Antrieb **(23; 75)** vorhanden ist, mit dem die wenigsten eine weitere Einheit **(3; 47, 51; 77)** direkt in Rotation versetzbar ist, um ein Ineinanderoder Auseinanderschrauben von Einheit **(1, 3, 5; 45, 47, 49, 51, 53; 72, 77)** zur Längenänderung der Vorrichtung vorzunehmen, und jede Einheit mit Ausnahme der Endeinheilten **(1, 5; 45, 53; 72, 77)** ein Innen- und ein Aussengewinde (**15, 22; 52; 54, 61, 56, 63, 65**) hat.

2. Verstelleinrichtung nach Anspruch 1, **dadurch gekennzeichnet, dass** jeweils eines der beiden miteinander kämmenden Gewinde als über annähernd den gesamten Mantel der Einheit verlaufendes Gewinde **(15, 16; 52, 54, 56, 58)** und das andere als Gewindekranz **(21, 22; 59, 61, 63, 65)** ausgebildet ist.

3. Verstelleinrichtung nach Anspruch 1 oder 2, **dadurch gekennzeichnet, dass** die miteinander kämmenden Einheiten **(1, 3, 5; 45, 47, 49, 51, 53; 72, 77)** selbsthemmende Gewinde haben.

4. Verstelleinrichtung nach einem der Ansprüche 1 bis 3, **dadurch gekennzeichnet, dass** sämtliche miteinander kämmenden Gewinde Einschraubwege aufweisen, welche gleich lang ausgebildet sind.

5. Verstelleinrichtung nach einem der Ansprüche 1 bis 4, **dadurch gekennzeichnet, dass** der Stator **(25)** des Antriebs **(23)** für eine der verdrehbaren Einheiten an der verdrehfesten Einheit und der Rotor an der benachbarten, mit dieser kämmenden Einheit angreift.

6. Verstelleinrichtung nach Anspruch 5, **dadurch gekennzeichnet, dass** im Stator des Antriebs **(23)** ein umlaufendes Wechselfeld erzeugbar ist, welches nach Art eines Asynchronmotors in der anderen Einheit ein elektrisches Wirbelfeld erzeugt, welches diese berührungsfrei in Rotation setzt.

7. Verstelleinrichtung nach einem der Ansprüche 1 bis 6, **dadurch gekennzeichnet, dass** die innerste und/oder die äusserste Einheit **(1, 5)** verdrehfest ausgebildet ist.

8. Verstelleinrichtung nach einem der Ansprüche 1 bis 7, **dadurch gekennzeichnet, dass** die innerste oder die äusserste Einheit **(77)** an ihrer freien Stirnseite um die geometrische Achse **(78)** frei rotierbar an einer Halteplatte **(73)** als Auflageelement für einen zu verschiebenden Gegenstand angeordnet ist.

9. Verstelleinrichtung nach einem der Ansprüche 1 bis 8, **gekennzeichnet durch** eine äussere **(1; 45, 49)** in eine mittlere **(3; 47, 51)** und in diese **(3; 47, 51)** eine innere **(5; 49, 53)**, einbringbare Einheit, und die Gewindegängigkeit von mittlerer und äusserer Einheit **(3, 1; 47, 45, 51, 49)** und die Gewindegängigkeit von mittlerer und innerer Einheit **(3, 5; 47, 49, 51, 53)** gegengängig sind, damit **durch** eine Verdrehung der mittleren Einheit **(3; 47, 51)** gleichzeitig innere und äussere Einheiten **(5, 1; 45, 49, 49, 53)** in die mittlere. Einheit **(3; 47, 51)** relativ hingezogen bzw. herausgeschoben werden.

10. Verstelleinrichtung nach Anspruch 9, **dadurch gekennzeichnet, dass** lediglich die mittlere Einheit **(3; 47, 51)** verdrehbar ausgebildet und durch eine Antriebseinheit **(23; 67)** in Rotation versetzbar ist, der Stator **(25)** an der äusseren **(1)** oder der inneren **(5)** Einheit gehalten ist und der Rotor **(33)** der Antriebseinheit **(23)** an der mittleren Einheit **(3)** angreift.

11. Verstelleinrichtung nach Anspruch 9 oder 10, **dadurch gekennzeichnet, dass** die Antriebseinheit **(23)** innerhalb der zylindrischen Einheiten **(1, 3, 5)** angeordnet ist; die innere Einheit **(5)** eine verdrehgesicherte Innenlängsaxialführung **(31)** für den Stator **(25)** hat und der Rotor **(33)** mit der mittleren Einheit **(3)** ein Drehmoment ausübend verbunden ist, wobei vorzugsweise die innere Einheit **(5)** mehrere, vorzugsweise drei einen gleichen gegenseitigen Winkelabstand aufweisende Innennuten **(31)** und der Stator **(25)** hierzu passende axial verschiebbare Ansätze **(27)** hat.

12. Verstelleinrichtung nach einem der Ansprüche 1 bis 11, **dadurch gekennzeichnet, dass** die äussere Einheit **(1)** einen Innengewindekranz **(21)** an ihrem inneren Ende **(17)** hat und die mittlere Einheit **(3)** ein Aussengewinde **(15)** hat, welches mit dem Innengewindekranz **(21)** der äusseren Einheit **(1)** kämmt, die mittlere Einheit **(3)** an ihrem der äusseren Einheit **(1)** abgewandten Ende einen Innengewindekranz **(22)** und die innere Einheit **(5)** ein Aussengewinde **(16)** hat, wobei dieser Innengewindekranz **(22)** mit diesem Aussengewinde **(16)** kämmt, und der Stator **(25)** eines elektrischen Antriebs **(23)** verdrehgesichert, aber axial verschiebbar an der inneren Einheit **(5)** gehalten ist und der Rotor **(33)** ein Drehmoment aufbringend auf die mittlere Einheit **(3)** wirkt, um den Abstand des freien Endes **(9)** der inneren Einheit **(5)** vom freien Ende **(7)** der äusseren Einheit **(1)** durch eine Rotation der mittleren Einheit **(3)** zu verändern.

13. Verstelleinrichtung nach einem der Ansprüche 1 bis 12, **dadurch gekennzeichnet, dass** jede Einheit ein Innengewinde und die weitere Einheit bzw. die restlichen Einheiten am Aussenmantel einen Aussengewindekranz als Verbindung haben.

14. Verstelleinrichtung nach einem der Ansprüche 1 bis 13, **gekennzeichnet durch** eine ungerade Anzahl (grösser als eins) gewindetragende zylinderrohrartige Einheiten **(45, 47, 49, 51, 53)**, wobei alle Einheiten **(45, 47, 49, 51, 53)** ineinander einbringbar sind, alle Einheiten **(47, 49, 51, 53),** bis auf eine äussere **(45),** ein Aussengewinde **(52, 54, 56, 58)** haben, vorzugsweise jeweils Einheiten mit einer geraden Zählzahl rotierend antreibbar sind und Einheiten mit einer ungeraden Zählzahl vom Ende der Verstelleinrichtung verdrehgesichert sowie bis auf die Erste verschiebbar ausgebildet sind.

## Claims

1. A linear adjustment device which, for linear, intrinsically stable adjustment, simply comprises mutually meshing cylindrical units (1, 3, 5; 45, 47, 49, 51, 53; 72, 77) which can be screwed into one another and which all have a common geometric axis (10; 44; 78), wherein at least three units are provided and one of the units (1, 5; 45, 49, 53; 72) is rotationally fixed and at least one further unit (3; 47, 51; 77) is formed so as to be rotatable about the geometric axis (10; 44; 78), at least one drive (23; 75) is provided, by means of which the at least one further unit (3; 47, 51; 77) can be directly set into rotation in order to screw together or unscrew units (1, 3, 5; 45, 47, 49, 51, 53; 72, 77) for the purpose of changing the length of the device, and each unit, with the exception of the end units (1, 5; 45, 53; 72, 77, has an internal and an external thread (15, 22; 52, 54, 61, 56, 63, 65).

2. An adjustment device according to claim 1, **characterised in that** in each case one of the two mutually meshing threads is formed as a thread (15, 16; 52, 54, 56, 58) extending over substantially the entire casing of the unit, and the other is formed as a threaded ring (21, 22; 59, 61, 63, 65).

3. An adjustment device according to claim 1 or 2, **characterised in that** the mutually meshing units (1, 3, 5; 45, 47, 49, 51, 53; 72, 77) have self-locking threads.

4. An adjustment device according to any one of claims 1 to 3, **characterised in that** all mutually meshing threads have screw paths of equal length.

5. An adjustment device according to any one of claims 1 to 4, **characterised in that** the stator (25) of the drive (23) for one of the rotatable units engages the rotationally fixed unit, and the rotor engages the adjacent unit meshing with said rotationally fixed unit.

6. An adjustment device according to claim 5, **characterised in that** a circulating alternating field can be generated in the stator of the drive (23) and, in the manner of an asynchronous motor, generates in the other unit an electric rotational field which contactlessly sets said other unit into rotation.

7. An adjustment device according to any one of claims 1 to 6, **characterised in that** the innermost and/or the outermost unit (1, 5) is rotationally fixed.

8. An adjustment device according to any one of claims 1 to 7, **characterised in that** the innermost or the outermost unit (77) is arranged, at its free end, on a holding plate (73) so as to be freely rotatable about the geometric axis (78), said holding plate (73) serving as a supporting member for an object to be displaced.

9. An adjustment device according to any one of claims 1 to 8, **characterised by** an outer (1; 45, 49) unit introducible into a middle (3; 47, 51) unit and an inner (5; 49, 53) unit introducible into the middle (3; 47, 51) unit, and by the thread direction of the middle and outer units (3, 1; 47, 45, 51, 49) and the thread direction of the middle and inner units (3, 5; 47, 49, 51, 53) running counter to one another so that, by rotation of the middle unit (3; 47, 51), the inner and outer units (5, 1; 45, 49, 49, 53) are simultaneously drawn into or pushed out of the middle unit (3; 47, 51).

10. An adjustment device according to claim 9, **characterised in that** only the middle unit (3; 47, 51) is rotatably formed and can be set into rotation by a drive unit (23; 67), the stator (25) is held on the outer (1) or the inner (5) unit, and the rotor (33) of the drive unit (23) engages the middle unit (3).

11. An adjustment device according to claim 9 or 10, **characterised in that** the drive unit (23) is arranged inside the cylindrical units (1, 3, 5), the inner unit (5) has a rotationally secured, inner, longitudinal axial guide (31) for the stator (25), and the rotor (33) is connected to the middle unit (3) so as to exert a torque, wherein preferably the inner unit (5) has a plurality of, preferably three, inner grooves (31) with uniform mutual angular spacing, and the stator (25) has axially displaceable projections (27) complementary to said inner grooves (31).

12. An adjustment device according to any one of claims 1 to 11, **characterised in that** the outer unit (1) has an internally threaded ring (21) at its inner end (17) and the middle unit (3) has an external thread (15) which meshes with the internally threaded ring (21) of the outer unit (1), the middle unit (3) has an internally threaded ring (22) at its end remote from the outer unit (1), and the inner unit (5) has an external thread (16), wherein said internally threaded ring (22) meshes with said external thread (16), and the stator (25) of an electric drive (23) is held on the inner unit (5) in a rotationally secured, but axially displaceable manner, and the rotor (33) acts on the middle unit (3) so as to exert a torque in order to change the distance of the free end (9) of the inner unit (5) from the free end (7) of the outer unit (1) by rotation of the middle unit (3).

13. An adjustment device according to any one of claims 1 to 12, **characterised in that** each unit has an internal thread and the further unit or the remaining units have an externally threaded ring acting as connecting means on their outer casing.

14. An adjustment device according to any one of claims 1 to 13, **characterised by** an uneven number (greater than one) of thread-carrying cylindrical units (45, 47, 49, 51, 53), wherein all units (45, 47, 49, 51, 53) are introducible into one another, all units (47, 49, 51, 53), except for an outer unit (45), have an external thread (52, 54, 56, 58), preferably even-numbered units are rotatably drivable and odd-numbered units, starting from the end of the adjustment device, are rotatably secured and, except for the first, are displaceably formed.

## Revendications

1. Dispositif d'ajustage linéaire, lequel comporte des unités du type tubes cylindriques (1, 3, 5; 45, 47, 49, 51, 53 ; 72, 77) s'engrenant uniquement mutuellement, pouvant être vissées les unes dans les autres, en vue d'un ajustage linéaire, stable en soi, lesquelles comportent toutes un axe géométrique (10 ; 44 ; 78) commun, moyennant quoi au moins trois unités sont disponibles et l'une des unités (1, 5 ; 45, 49, 53 ; 72) fixe ainsi qu'au moins une autre unité (3 ; 47, 51 ; 77) sont formées de manière à pouvoir tourner autour de l'axe géométrique (10 ; 44 ; 78), au moins un entraînement (23 ; 75) est disponible par l'intermédiaire duquel la au moins une autre unité (3 ; 47, 51 ; 77) peut être directement mise en rotation, afin de procéder à un vissage et un dévissage de l'unité (1, 3, 5 ; 45, 47, 49, 51, 53 ; 72, 77) en vue d'une modification de la longueur du dispositif, et chaque unité à l'exception des unités (1, 5 ; 45, 53 ; 72, 77) comporte un filetage interne et un filetage externe (15, 22 ; 52 , 54, 61, 56, 63, 65).

2. Dispositif d'ajustage selon la revendication 1, **caractérisé en ce que** un des deux filetages s'engrenant mutuellement est respectivement formée en tant que filetage (15, 16 ; 52, 54, 56, 58) s'étendant sur à peu près la totalité de l'enveloppe de l'unité et l'autre en tant qu'anneau fileté (21, 22 ; 59, 61, 63, 65).

3. Dispositif d'ajustage selon l'une quelconque des revendications 1 ou 2, **caractérisé en ce que** les unités s'engrenant mutuellement (1, 3, 5 ; 45, 47, 49, 51, 53 ; 72, 77) comportent des filetage autobloquants.

4. Dispositif d'ajustage selon l'une quelconque des revendications 1 à 3, **caractérisé en ce que** l'ensemble des filetages s'engrenant mutuellement comporte des voies filetées qui forment la même longueur.

5. Dispositif d'ajustage selon l'une quelconque des revendications 1 à 4, **caractérisé en ce que** le stator (25) de l'entraînement (23) pour l'une des unités rotative est appliqué à l'unité fixe et le rotor est appliqué à l'unité adjacente s'engrenant avec ladite unité fixe.

6. Dispositif d'ajustage selon la revendication 5, **caractérisé en ce qu'**un champ alternatif circulaire est produit dans le stator de l'entraînement (23), lequel champ produit un champ rotationnel électrique dans l'autre unité à la manière d'un moteur asynchrone, lequel champ rotationnel met en rotation ladite unité sans contact.

7. Dispositif d'ajustage selon l'une quelconque des revendications 1 à 6, **caractérisé en ce que** l'unité la plus interne et/ou la plus externe (1, 5) est formée de façon fixe.

8. Dispositif d'ajustage selon l'une quelconque des revendications 1 à 7, **caractérisé en ce que** l'unité la plus interne ou la plus externe (77) est disposée sur sa face frontale libre autour de l'axe géométrique (78) de manière à pouvoir tourner librement sur une plaque de retenue (73) en tant qu'élément d'appui pour un objet à déplacer.

9. Dispositif d'ajustage selon l'une quelconque des revendications 1 à 8, **caractérisé en ce que** une unité externe (1 ; 45, 49) peut être introduite dans une unité centrale (3 ; 47, 51) et dans cette dernière (3 ; 47, 51) une unité interne (5 ; 49, 53), et **en ce que** la direction du pas de vis de l'unité centrale et de l'unité externe (3, 1 ; 47, 45, 51, 49) et la direction du pas de vis de l'unité centrale et de l'unité interne (3, 5 ; 47, 49, 51, 53) sont opposées, afin que par une rotation de l'unité centrale (5 ; 47, 51) les unités interne et externe (5, 1 ; 45, 49, 49, 53) soient relativement simultanément rapprochées dans l'unité centrale (3 ; 47, 51) ou coulissées hors de cette dernière.

10. Dispositif d'ajustage selon la revendication 9, **caractérisé en ce que** seule l'unité centrale (3 ; 47, 51) est formée de manière à pouvoir tourner et peut être mise en rotation par l'intermédiaire d'une unité d'entraînement (23 ; 67), le stator (25) est maintenu sur l'unité externe (1) ou l'unité interne (5) et le rotor (33) de l'unité d'entraînement (23) est appliqué à l'unité centrale (3).

11. Dispositif d'ajustage selon la revendication 9 ou 10, **caractérisé en ce que** l'unité d'entraînement (23) est disposée à l'intérieur des unités cylindriques (1, 3, 5) ; l'unité interne (5) comporte un guidage axial longitudinal interne (31) pour le stator (25) et le rotor (33) exerçant un couple est reliée à l'unité centrale (3), moyennant quoi l'unité centrale (5) comporte plusieurs, de préférence trois rainures internes (31) comportant un écart angulaire identique commun et le stator (25) des épaulements (27) appropriés pouvant être déplacés dans la direction axiale.

12. Dispositif d'ajustage selon l'une quelconque des revendications 1 à 11, **caractérisé en ce que** l'unité externe (1) comporte un anneau à filetage intérieur (21) sur son extrémité intérieure (17) et l'unité centrale (3) un filetage externe (15), lequel filetage s'engrène avec l'anneau à filetage intérieur (21) de l'unité externe (1), l'unité centrale (3) comporte sur son extrémité détournée de l'unité externe (1) un anneau à filetage interne (22) et l'unité interne (5) un filetage externe (16), moyennant quoi cet anneau à filetage interne (22) s'engrène avec ce filetage externe (16), et le stator (25) d'un entraînement électrique (23) est protégé contre la rotation, mais est maintenu sur l'unité interne (5) de manière à pouvoir être déplacé dans la direction axiale et le rotor (33) agit en appliquant un couple sur l'unité centrale (3), afin de modifier l'écart de l'extrémité libre (9) de l'unité interne (5) depuis l'extrémité libre (7) de l'unité externe (1) par une rotation de l'unité centrale (3).

13. Dispositif d'ajustage selon l'une quelconque des revendications 1 à 12, **caractérisé en ce que** chaque unité comporte un filetage interne et l'unité suivante ou les unités restantes comportent sur l'enveloppe externe un anneau à filetage externe en tant que liaison.

14. Dispositif d'ajustage selon l'une quelconque des revendications 1 à 13, **caractérisé par** un nombre impair (supérieur à 1) d'unités du type tubes cylindriques portant un filetage (45, 47, 49, 51, 53), moyennant quoi toutes les unités (45, 47, 49, 51, 53) peuvent être introduites les unes dans les autres, toutes les unités (47, 49, 51, 53), à l'exception d'une unité externe (45), comportent un filetage externe (52, 54, 56, 58), de préférence les unités avec un nombre de comptage pair peuvent être entraînées de manière rotative respectivement et les unités avec un nombre de comptage impair sont protégées contre la rotation par l'extrémité du dispositif d'ajustage et sont formées à l'exception de la première de manière à pouvoir être déplacées.
